# EUROPEAN PATENT APPLICATION

(11) **EP 1 441 532 A2**
(43) Date of publication of application: **28.07.2004**
(21) Application number: 03104850.7
(22) Date of filing: 19.12.2003
(51) Int. Cl.: H04N 7/24

(54) **Buffering arrangement**

(30) Priority: 20.12.2002 FI 20022261
(71) Applicant: Oplayo Oy, 00180 Helsinki (FI)
(72) Inventor: Penttilä, Kari, 03250 Ojakkala (FI); Pohjola, Teemu, Espoo 02660 (FI)
(74) Representative: Savela, Antti-Jussi

(57) **Abstract**

The invention relates to encoding and decoding streamed data. An encoder reallocates an amount of bits from the time frame of a compressed scene having rich information content to the time frame of a compressed scene having low information content. Thus, bits between scenes of different compressibility/quality/content are reallocated such that the available constant bandwidth is fully utilized. Further, the encoder incorporates markers into the stream, each marker comprising instructions to the decoder like information about the size and duration of the scene following the marker.

## Description

### Field of the Invention

This invention relates to arrangements for buffering a stream in a receiving terminal. The stream is transmitted from a sending terminal to the receiving terminal through a communication network.

### Background of the Invention

Videos and multimedia shows are often streamed for transmission to a receiving terminal. Streaming means that the data of the video or multimedia show is transmitted at the same time as it is displayed in the receiving terminal, i.e. when a part of the show is displayed, another part is being transmitted. In particular, the streaming technique is practical when transmitting continuous data, such as videos.

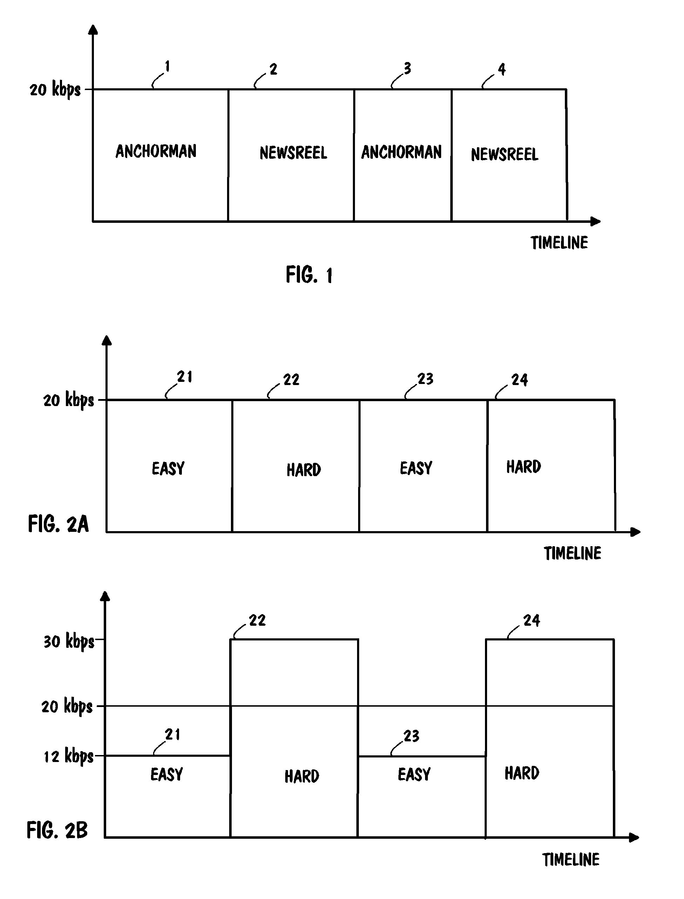

FIG. **1** shows an example, where an available bandwidth of a communication network (a GPRS network) for a video or other image information is 20 kbps. The streamed video in the figure comprises several scenes **1** to **4**. Lets assume the video be today's news. The first scene **1** shows an anchorman, who discusses the news, the second scene **2** shows a newsreel from a place of action, the third scene **3** shows the anchorman again, and the fourth scene **4** shows another newsreel. The scenes are streamed in a displaying order.

As can be noted, the bandwidth is constant over the period of the news video. In the receiving terminal the incoming stream goes through a buffer, which is used for ensuring that displaying the stream (i.e. the news video in this example) does not break if some interruptions happen in the transmission path or if the bit rate at which the stream has been coded varies over time.

A compression technique to be applied in a given video compression case is a compromise between the quality of the decompressed video and the available bandwidth.

Thus, if constant quality of a decompressed video is required then the bit rate of the compressed video stream varies greatly because compression of frames including rich information content produces more bits than frames having low information content. In other words, a prerequisite for constant quality is variable bandwidth of the transmission channel.

In contrast, if the bandwidth of the transmission channel is constant then the compressed video stream should also be constant. This results in great variations in quality of the decompressed video stream because compression ratio of frames including rich information is high at the cost of the quality of the decompressed frames.

In summary, compression of video frames of varying contents with a constant bit rate leads to varying quality level of decompressed video frames, and compression of frames while sustaining constant quality level of the decompressed frames leads to a fluctuating bit rate produced by the compressor.

Referring back to fig. 1, the prior art teaches five approaches for compression. Firstly, each of scenes 1-3 could be compressed at the quality level that leads to the full utilization of the available bandwidth of the transmission channel. This, however, leads to variations in quality levels of the decompressed video from scene to scene.

Secondly, scenes 2 and 4 having rich information contents ("difficult" scenes) may be used to determine a fixed quality level and compress all the scenes of the video to said fixed quality level. This, however, leads to, concerning frames 1 and 3 having low information content ("easy" scenes), that bits are wasted and quality of those frames after decompression is not so good as it could be.

Thirdly, bit rates of the compressed "difficult" scenes 2 and 4 may be allowed to exceed the available bandwidth while keeping the bit rate of the compressed "easier" scenes 1 and 3 below said bandwidth so that the average bit rate equals the available bandwidth. This would smooth quality variations when compared with the first principle and improve the quality of all scenes when compared with second principle. However, bit rates of the "difficult" scenes higher than the available bandwidth may empty the buffer at the receiving end thus causing in displaying the video an interruption that annoys the viewer.

Fourthly, information obtained from the buffering arrangement at the receiving end could be used for determining the bit rate to which the video should be compressed. This is based on the facts that the scenes with lower bit rates than the available bandwidth increase the amount of bits in the buffer (less bits per second are taken from buffer than added into it) and the higher bit rates decrease the buffer. Increase and decrease compensate each other and buffer underflow never occurs.

Fifthly, taking into attention that the low quality of videos transmitted at low bandwidths and the fact that the quality improves significantly with every increase in the bit rate used, the average compression bit rate over the available bandwidth could be increased with acceptance of interruptions while displaying the video.

An objective of the present invention is to devise a compression/decompression technique for a streaming video that is transmitted on a channel having a constant bandwidth: The technique should improve the viewing experience while utilizing the available bandwidth to the full extent, minimizing quality changes between scenes and avoiding interruptions within a scene to be displayed.

### Summary of the Invention

The invention is based on the insight that an encoder may reallocate a predetermined amount of bits of a compressed scene having its time frame to the time frame of the previous scene. This is done when transmission of all bits of the compressed scene during its time frame would require a bandwidth that would exceed the bandwidth of the available transmission channel and when transmission of all bits of the previous scene during its time frame leaves free capacity for transmitting said predetermined amount of bits. In addition, transmission of all bits of the previous scene along with said predetermined amount of bits should not exceed the bandwidth of the available transmission channel.

Thus, reallocating an amount of bits from the time frame of a compressed "hard" scene decreases the transmission bit rate of this scene whereas positioning said amount of bits to the time frame of the "easy scene increases the transmission bit rate of said scene". In other words, bits between scenes of different compressibility/quality/content are reallocated such that the available bandwidth is fully utilized. The encoded bit rate may temporarily slightly exceed the available bandwidth but this is used only to such an extent that no underflow happens in a buffer at the receiving end. The underflow would cause an interruption in the video display. To perform reallocation of bits properly the encoder must know the available bandwidth of the transmission channel as well as the buffer size of the receiving terminal.

Further, in order that the decoder at a receiving end could decode "hard" scenes and display them within their proper time frames and at proper bit rates, it must have knowledge about the reallocated bits in the incoming streamed data. Therefore, the encoder incorporates markers into the stream, each marker comprising instructions to the decoder like information about the size and duration of the scene following the marker.

While receiving the streamed data the decoder monitors markers. Upon detecting a marker the decoders calculates, based on information embedded in the marker, the time needed for buffering incoming data of the following scene. The buffering time is calculated taking into account the buffer size, the incoming data rate, and the size and duration of the scene following the marker. Thus, instead of displaying a "hard" scene immediately after the previous scene has been displayed, the decoder may interrupt outputting data stream from the decoder for a while needed for buffering enough data. Then, data of the scene is read from the buffer at a speed higher than the bandwidth of the transmission channel. It is worth noting that the time for buffering data has been calculated so that the buffer does not become empty while reading bits of the scene

During the time when outputting data from the decoder is interrupted padding frames may be added between the scenes of a video, or multimedia show. The padding frames may be, for example, black frames or they may contain a simple figure or text. The time period when padding frames are displayed is used for buffering the incoming data of the next scene. Therefore, scenes that require higher bandwidth than other scenes of the same stream can be buffered prior to displaying. In this way, the quality level of the separate scenes perceived by a viewer can be kept almost constant.

The receiving terminal may generate the padding frames. Alternatively, the sending terminal may generate at least one padding frame and insert the padding frame between two subsequent scenes of the stream. Then the receiving terminal stores the padding frame for displaying it during interruptions.

### Brief Description of the Drawings

In the following the invention is described in more detail by means of Figs **1 - 10** in the attached drawings where,
- FIG. **1**: illustrates an example of a known solution,
- FIG. **2A**: illustrates a principle of a constant bandwidth of a show,
- FIG. **2B**: illustrates a principle of a constant quality level of a show,
- FIG. **3**: illustrates an example of an automatic buffering of a show,
- FIG. **4**: illustrates an example of a problem of the automatic buffering,
- FIG. **5**: illustrates an example of the inventive solution,
- FIG. **6**: illustrates an example of a measurement for recognizing subsequent video scenes,
- FIG. **7**: illustrates an example of indications of video scenes,
- FIG. **8**: illustrates an example of a stream and what it looks like if the breaks have been added,
- FIG. **9**: illustrates an example of an embodiment of the inventive method in a flow chart format,
- FIG. **10**: illustrates an example of an inventive arrangement.

### Description of the Invention

FIG. **2A** illustrates a principle of a constant bandwidth of a presentation. By way of example, the bandwidth for the image information of a show (video, multimedia, etc.) is 26 kbps (i.e. the available bandwidth in a GPRS network). The scenes 21, 22, 23 and 24 of the show are transmitted, (i.e. streamed), in the same order as they are displayed in a receiving terminal. It would be efficient to use the whole available bandwidth, so each of scenes 21-24 could be compressed at the quality level that leads to the full utilization of the available bandwidth of the transmission channel. This, however, leads to variations in quality levels of the decompressed scenes perceived by a viewer. For scenes 22 and 24, 20 kbps is not enough to achieve the same quality level, as it is for scenes 21 and 23. The quality changes between the lower bandwidth scenes **21, 23** and the higher bandwidth scenes **22, 24** are disturbing when the show is viewed.

A principle of a constant quality level show is illustrated in FIG. **2B**. If the available bandwidth allows transmission of all the scenes in a required time then the show quality level is fixed. Thus, when viewed the scenes look consistent, since the quality does not change between the scenes **21** to **24**. Let the required bandwidth for the fixed quality be 12 kbps for the lower bandwidth scenes **21** and **23** and 30 kbps for the higher bandwidth scenes. As can be seen in FIG. **2B**, the constant 20 kbps bandwidth is sufficient for the lower bandwidth scenes but the higher bandwidth scenes **22** and **24** cannot be transmitted during their respective transmission periods.

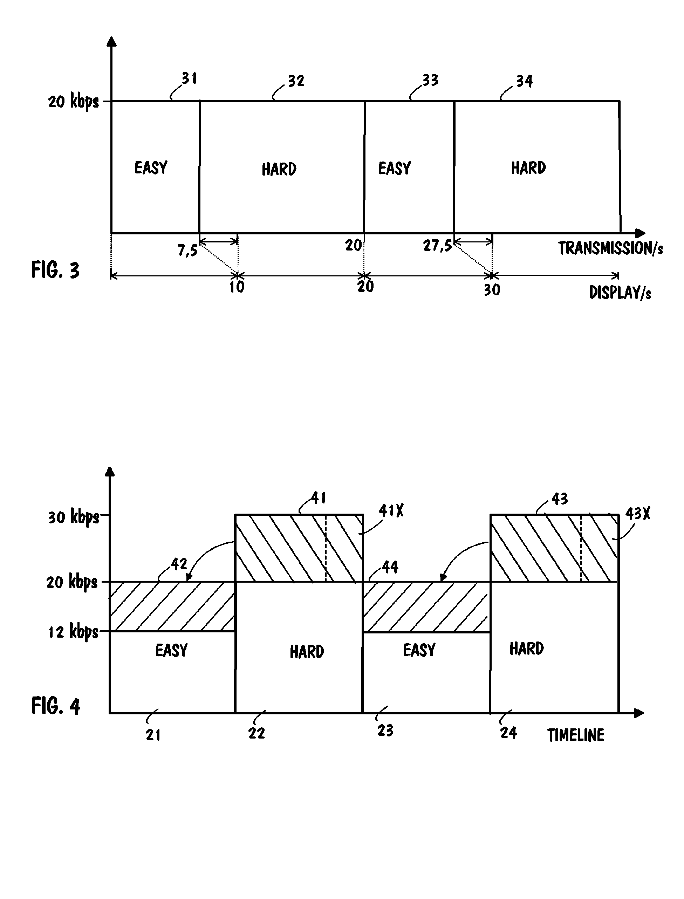

FIG. **3** illustrates an example of an automatic buffering in a receiving terminal, which alleviates the problem of transmitting higher bandwidth scenes. Let's assume that the available bandwidth of the transmission link is 20 kbps and each of scenes **31** to **34** take 10 seconds to display. The size of each of the encoded lower bandwidth scenes **31**, **33** is 150 kb and the size of each of the encoded higher bandwidth scenes **32, 34** is 250 kb.

When transmitting the lower bandwidth scene by using the whole available bandwidth, 7.5 seconds is needed for the transmission (150kb / 20 kbps = 7,5 seconds). Thus there exists 2.5 seconds before the following higher bandwidth scenes are displayed, and this 2.5 second can be utilized for transmitting 50 kb of the subsequent higher bandwidth scene (20 kbps * 2.5 s = 50 kb). The rest 200 kb of the higher bandwidth scene is transmitted in the actual transmission period of 10 seconds, so due to the automatic buffering, all of the higher bandwidth scenes **32, 34** can be transmi tted through the 20 kbps channel and viewed during their respective time periods.

FIG. **4** illustrates a case where the automatic buffering scheme fails to provide sufficient buffering. The figure shows as a function of time the bit rates that a receiving terminal should use for decoding and displaying four subsequent scenes correctly. It is worth noting that the bit rates are the same as the encoder of the transmitting terminal has produced. The horizontal 20 kbps line illustrates the constant bandwidth of the transmission link.

The bit rate for decoding and properly displaying the lower bandwidth scenes **21, 23** should be 12 kbps whereas the bit rate for the higher bandwidth scenes **22, 24** should be 30 kbps. Let us also assume that the duration of each of the scenes is 10 seconds Thus, the total amount of the bits of the lower bandwidth scenes is 120 kb whereas the total amount of the bits of the higher bandwidth scenes is 300 kb.

Since the available bandwidth of the link is constant 20 kbps, it is impossible to achieve the decoding rate of 30 kbps of the higher bandwidth scenes without buffering an amount of their bits prior to their desired display period. Thus, the amount of the buffered bits should be 100 kb for each of the higher bandwidth scenes. Buffering may be done as explained in connection of Fig. **3**. Consequently, 80 kb of the higher bandwidth scenes can be buffered in this example. Reference numbers **42** and **44** denote these amounts. But 20 kb of the higher bandwidth scenes cannot be buffered beforehand with the stated constraints. Those amounts are denoted by reference numbers **41X, 43X**. When the actual presentation time of the higher bandwidth scenes starts, bits are firstly read from the buffer at the rate of 30 kbps while at the same time bits are received into the buffer at the constant link rate of 20 kbps. Thus, the buffer becomes empty very quickly resulting in interruption of the presentation of the show. It is clear that the automatic buffering scheme alone is insufficient for achieving consistent quality for all the scenes. More accurately, it is clear that the bit rates for the different scenes cannot be fixed before knowing the lengths of the scenes and how full the buffer would be at the beginning of each scene.

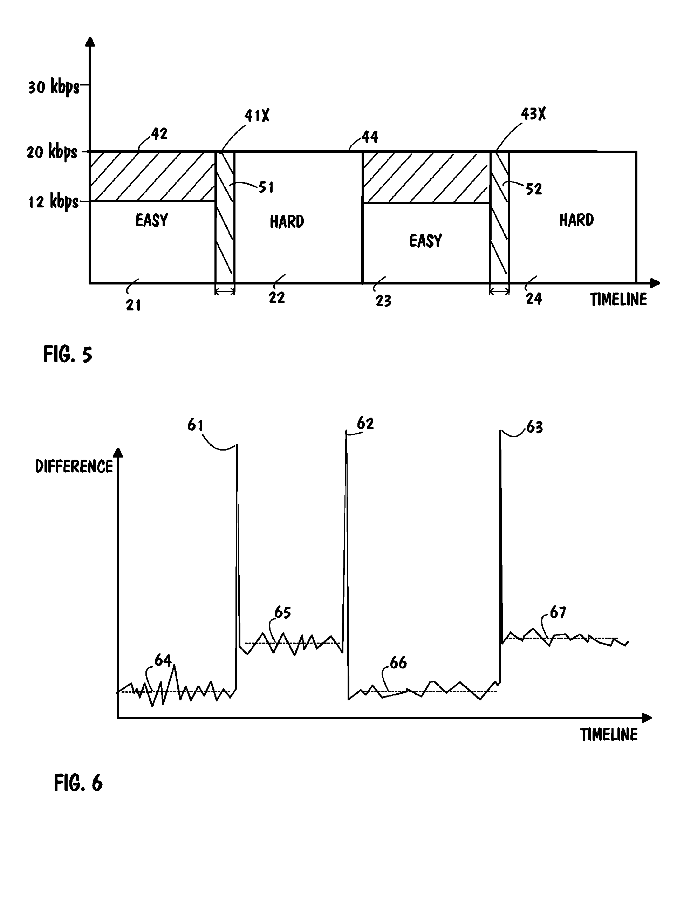

FIG. **5** illustrates an example of the inventive solution for this problem. Postponing the starting moment of displaying a high bandwidth scene for a certain period and utilizing this period for further buffering of the scene allow expanding the automatic buffering scheme. During the period of further buffering the receiving terminal displays padding frames, for example. Thus, the padding period provides sufficient time to buffer the high bandwidth scene prior to displaying it, so comparing to FIG. **4**, the parts of the higher bandwidth scenes **41X, 43X** that the automatic buffering can not buffer are buffered in the receiving terminal during said certain periods.

A user perceives the displayed padding frames for example, as a black background or a simple figure, which is visible for the certain period before starting to display the scene. Thus the receiving terminal changes the structure of the streamed show by causing a short break prior to displaying a high bandwidth scene. Since the structure is changed, the displayed stream looks different than the original stream, but the change is acceptable because it makes it possible to achieve such a quality level for each of the scenes, variation of which the viewer does not perceive disturbing. Due to the invention the whole quality level of the show improves.

Subsequent scenes must be recognized so that padding frames may be added to the displayed show while buffering the incoming stream. When the receiving terminal receives the stream, it monitors the data flow for noting markers in the stream. The marker before a scene contain information about the size and duration of the scene.

The markers are added and encoded into the stream at the transmitting end. Therefore it must be discovered first where are the "borders" between subsequent scenes. Discovering may, for example, be based on a difference factor between subsequent frames. The difference between two subsequent frames in the stream is measured and the difference factor is calculated according to the measurement. When a scene ends and a new scene begins, the difference between the last frame of the previous scene and the first frame of the next scene is large, causing a large difference factor.

FIG. **6** illustrates an example of a measurement for recognizing subsequent video scenes. It should be stressed that the measurement is done at the transmitting end for finding out the correct positions for the markers in the stream. As can be seen, the peaks **61, 62, 63** in the difference factor differ remarkably from usual levels **64, 65, 66, 67** and serve as indicators for reasoning that the border between a low bandwidth scene and a high bandwidth scene resides at the time or location indicated by the difference factor. The usual levels illustrate the difference factor between two frames of the same scene. A marker is inserted at each border.

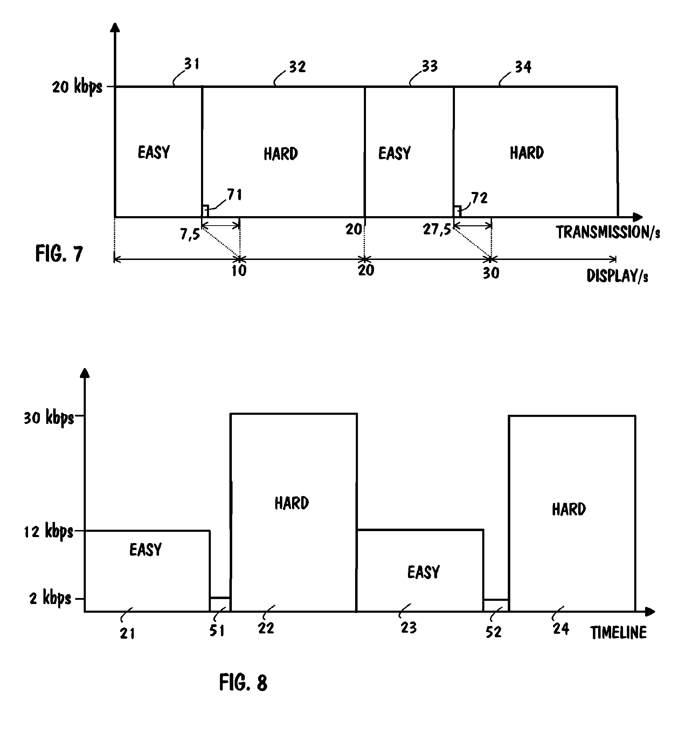

FIG. **7** illustrates an example of markers **71, 72** of video scenes. The show along with the markers is transmitted (streamed) in the normal order, and the automatic buffering is utilized in the reception. Encoded markers consume transmission bandwidth only insignificantly. Moreover, if the markers contain also a few padding frames representing a simple figure of background, encoding them does not require much bandwidth.

A marker transmitted at least before every high bandwidth scene informs the receiving terminal to postpone displaying the scene following the marker, buffer the scene and add padding frames while the scene is being buffered. The receiving terminal uses information that is included in the marker (a scene starts, the size and duration of the scene) and the knowledge of the available bandwidth for determining the need for buffering, the buffering time, and, consequently, the length of the interruption in displaying the video. The determination preferably takes into account the automatic buffering. It should be noted that it is not necessarily to put a marker prior to lower bandwidth scenes. If a marker is absent then the receiver continues rendering the incoming data immediately. However, it is useful that a marker precedes all scenes, since in this way the same stream is suitable for transmission via links with different bandwidths. The marker before each scene instructs the receiver to process the scene properly.

FIG. **8** illustrates an example of a stream in the receiver after the stream has been rendered based on the markers. The scenes **21** to **24** are illustrated in their encoded size, as are the breaks **51, 52**. The higher bandwidth scenes **22** and **24** have now the original bit rate of 30 kbps but this has accomplished at the cost of interruptions 51, 52 between scenes. It has been said above that the padding frames contain a simple background figure. The padding frame may also be the last frame of a scene or the first frame of the next scene. But it is also possible to add empty frames. In this case, the display shows a blank screen while data of the higher bandwidth scenes is being buffered.

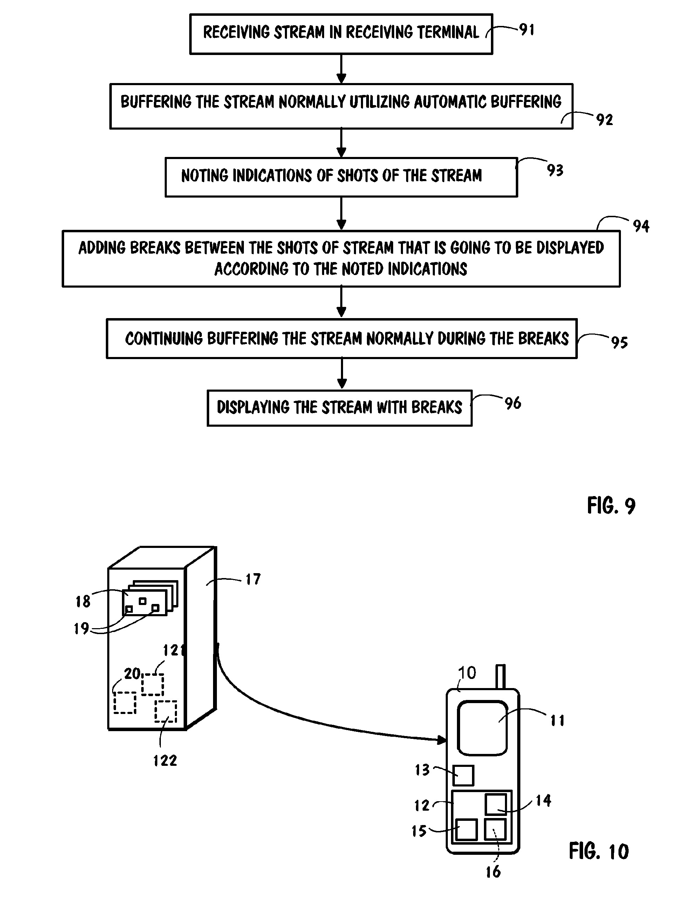

FIG. **9** illustrates method steps in a flow chart format. It should be noted that this example includes basic steps only for understanding the in-vention. First, the receiving terminal receives data of the stream, phase **91**. The stream is buffered in the buffer as known, and the automatic buffering may be utilized, phase **92**. The receiving terminal monitors the stream for discovering markers in the stream, phase **93**. After a marker has been found, the period needed for further buffering will be calculated, phase **94**. For doing that information included in the marker is extracted. The information contains playing time of the scene in seconds and the amount of the bits of the scene in kilobits. Now it is easy to calculate the correct bit rate needed to input the decoder. On the other hand, the receiver knows the bandwidth of the link and the buffer size. Based on said figures the receiver calculates the buffering period.

Then the incoming bit stream from the link is buffered until the buffering period expires, phase **95**. At the same padding frames are added, phase **97**, and displayed, phase **96**. As a result, adding padding frames create more time for further buffering the higher bandwidth scenes. A user sees between the scenes only a short interruption during which padding frames are displayed.

FIG. **10** illustrates an example of a receiving terminal. The receiving terminal **10**, such as a mobile phone, receives a stream containing a multimedia show. The receiving terminal comprises buffer **13** wherein a part of the continuously received streamed data is buffered for eliminating interruptions in the transmission. A player **12** may display the streamed show on the receiving terminal display **11** as it is received. According to the invention, padding frames are added, if necessary, into the streamed data to be displayed. A monitoring module **14** observes scene markers **19** in the stream. A forming module **15** forms padding frames that are displayed for the duration of buffering bits. An adding module **16** adds padding frames into the data to be displayed. The player (an application for playing received material in the receiving terminal) preferably contains the monitoring module, the forming module and the adding module. In another option, the forming module may comprise the adding module.

Since the invention may be embodied in a computer program product stored on a computer readable storage media, the invention relates to the computer program product as well. The program product is adapted to perform at least the steps of claim 1 when run on a computer. It should be noted that a receiving terminal (and a sending terminal) comprises a small computer (a small processor unit and a memory).

The receiving terminal may be devised in many ways. For example, the noting module may monitor the stream before or after buffering. The noting module, forming module and the adding module may also be separate elements or connected to one element, and they may be outside the player. A sending terminal may be a server, another mobile terminal, or any other device capable of sending streams. It should also be noted that short delays exists between different processes, such as the buffering and the displaying although the above examples do not illustrate them.

The invention is not restricted to the examples described in this text, but it can also be utilized in other solutions, in the scope of the inventive idea.

## Claims

1. A method for encoding successive video scenes to form a streamed video for transmission through a transmission channel of a constant bit rate, wherein each scene has its time frame,
**characterized by** the steps of:
encoding a scene having rich information content to a bit rate higher than the constant bit rate of the transmission channel,
encoding a scene having low information content to a bit rate that is lower than the constant bit rate of the transmission channel and leaves free transmission capacity within the time frame of the scene, and
reallocating an amount of bits of the encoded scene having rich information content to the time frame of the encoded scene having low information content, wherein the amount of bits occupy the free transmission capacity.

2. The method as in claim 1, **characterized in that**
a marker is inserted into the streamed video before the reallocated bits, said marker comprising information about the size and the time frame of the scene having rich information content.

3. The method as in claim 1, **characterized by** calculating the amount of the bits to be reallocated on the basis of the bit rate of the transmission channel, duration of the time frame of the scene having rich information content, and the buffer size of a terminal receiving the streamed video.

4. The method as in claim 1, **characterized in that** the bit rates of the encoded scenes are chosen such that displaying decoded scenes yields similar qualities perceived by a viewer.

5. A method for decoding data of a streamed video in a receiving terminal comprising a data buffer, the streamed video incoming at a constant transmission bit rate and containing subsequent video scenes to be displayed in the receiving terminal,
**characterized by** the steps of:
detecting the starting point of a scene,
calculating the buffering time needed for buffering incoming data of the scene following the starting point so that the buffering time is sufficient to guarantee uninterrupted displaying of the scene at its proper rate,
buffering incoming data of the streamed video until the buffering time has lapsed,
reading data from the data buffer at a rate higher than the bit rate of the incoming streamed video.

6. The method according to claim 5, **characterized in that**
the starting point comprises a marker in the streamed video, the marker including information about the duration and size of the scene following the marker in the streamed video, and
based on said information and the size of the data buffer, the buffering time is calculated.

7. The method according to claim 5, **characterized in that** decoding of the streamed video is interrupted during buffering the incoming data.

8. The method according to claim 7, **characterized in that** the last decoded frame of the previous scene is shown on the display during interruption.

9. The method according to claim 7, **characterized in that** a uniform background, a simple figure, or a simple image is shown on the display during interruption.

10. The method according to claim 5, **characterized in that** padding frames are generated and shown on the display during interruption.

11. The method according to claim 5, wherein an automatic buffering scheme is utilized.

12. An arrangement for decoding data of a streamed video in a receiving terminal comprising a data buffer, the streamed video incoming at a constant transmission bit rate and containing consecutive video scenes to be displayed in the receiving terminal, **characterized in that** it comprises
a monitoring module for observing markers in the stream received, each marker containing information about the size of the scene following said marker in the stream,
a calculating unit for calculating, based on said information and the size of the data buffer, the buffering time needed for buffering incoming data of the scene following the marker so that the buffering time is sufficient to guarantee uninterrupted displaying of the scene at its proper rate.

13. The arrangement as in claim 12, **characterized by** an forming module for forming a padding frame to be displayed during the buffering time.

14. An arrangement according to claim 12 **characterized in that** the forming module is in a player.

15. A computer program product stored on a computer readable storage media, the product being adapted to perform the steps of claim 1 when run on a computer.
